# EUROPÄISCHE PATENTANMELDUNG

(11) **EP 0 959 599 A2**
(43) Veröffentlichungstag der Anmeldung: **24.11.1999**
(21) Anmeldenummer: 99108971.5
(22) Anmeldetag: 06.05.1999
(51) Int. Cl.: H04L 29/06, H04L 12/64

(54) **Verfahren zum Wechsel von einem ersten in einen zweiten Übertragungsweg und/oder Übertragungsmodus ohne Unterbrechung der Übertragung**

(30) Priorität: 06.05.1998 DE 19820221
(71) Anmelder: SIEMENS AKTIENGESELLSCHAFT, 80333 München (DE)
(72) Erfinder: Zörnack, Alexander, 85716 Unterschleissheim (DE)

(57) **Zusammenfassung**

Es wird ein Verfahren beschrieben, welches es ermöglicht, während der Übertragung das Übertragungsprotokoll und/oder den Übertragungsweg zu wechseln. Dies geschieht durch ein zentrales Entscheidungssystem, in Abhängigkeit von Anforderungen, welche entweder während der Übertragung von dem Teilnehmer eingegeben oder verändert werden, oder abhängig von Grenzwerten welche vor oder während der Übertragung definiert werden.

## Beschreibung

Die Erfindung betrifft ein Verfahren zur Übertragung von Informationen wie Daten, Sprache etc.

Um Informationen zu übertragen, muß ein Telekommunikationsteilnehmer explizit vor dem Beginn der Informations-Übertragung einen Übertragungsweg und damit ein Übertragungsprotokoll auswählen.

So kann inzwischen ein Benutzer eines herkömmlichen Telefons zwischen verschiedenen Telefonnetz-Anbietern wählen. Zum Beispiel mittels einer zusätzlichen Vorwahl, die vor der eigentlichen Telefonnummer gewählt wird (sogenannte 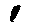 Preselection'), wird der Netzanbieter gewählt, für die komplette Verbindung. Die Auswahl des Anbieters trifft dabei der Teilnehmer, aufgrund von ihm zur Verfügung stehenden Informationen wie Tarifangaben.

Auch ein Benutzer eines PC hat bereits mehrere Möglichkeiten, eine Übertragung zu einem Zielgerätes zu bewirken. Dies reicht von direkter Übertragung mittels Modem und Telefonleitung bis zur Benutzung sogenannter Online-Dienste (wie AOL, Compuserve) oder Internet-Provider.

Sinkt während der Verbindung die Übertragungsqualität stark, so wird die Verbindung jedoch unterbrochen.
Ändern sich die Anforderungen des Teilnehmers während der Übertragung, so hat dieser nur die Möglichkeit, die Verbindung zu abzubrechen und eine neue, den geänderten Anforderungen angemessene Verbindung aufzubauen.

Aufgabe der Erfindung ist es, eine Lösung für die oben genannten Probleme anzugeben.

Diese Aufgabe wird gelöst durch ein Verfahren, welches es ermöglicht, während der Übertragung das Übertragungsprotokoll und/oder den Übertragungsweg zu wechseln. Dies geschieht in Abhängigkeit von Anforderungen, welche entweder während der Übertragung von dem Teilnehmer eingegeben oder verändert werden, oder abhängig von Grenzwerten welche vor oder während der Übertragung definiert werden.

Der Teilnehmer, welcher einer Übertragung wünscht, baut zuerst einen Übertragungsweg mit Hilfe einer intelligenten Entscheidungsplattform auf. Aufgrund bereits gespeicherter Dienstanforderungen des Teilnehmers wird ein erster Weg festgelegt und die Übertragung begonnen.
Ändern sich während der Übertragung nun entweder die Anforderungen des Teilnehmers oder die Qualität der Übertragung, so wird die Entscheidungsplattform über die Notwendigkeit der Festlegung eines zweiten Übertragungsweges informiert.

Durch diese Vorgehensweise wird zu Beginn der Übertragung das für den Anwendungsfall optimale Übertragungsprotokoll und der passende Übertragungsweg gewählt. Weiterhin wird auch während der Übertragung die automatische Verwendung eines optimalen Protokolls beibehalten, wenn durch Über- oder Unterschreiten bestimmter Grenzwerte ein Wechsel des Übertragungsprotokolls durch eine intelligente Entscheidungsplattform initiiert wird.

Vorteilhafte Ausgestaltungen und Weiterbildungen sind in den Unteransprüchen angegeben.

Die Anforderungen und Grenzwerte, nach denen die intelligente Entscheidungsplattform Wegewahlentscheidungen trifft und Übertragungswege festlegt, betreffen sogenannte Dienstgüteparameter der Übertragung, wie zum Beispiel die zur Verfügung stehende Bandbreite, die Übertragungssicherheit, die Übertragungsgeschwindigkeit oder die Kosten. Bei paketvermittelter Datenübertragung können weitere Faktoren eine Rolle spielen, beispielsweise die Häufigkeit von Wiederholungen (d. h. wie viele Pakete erreichen den Empfänger) oder auch die Übertragungssicherheit, d. h. die Abhörsicherheit des Übertragungsweges.

Mißt die intelligente Entscheidungsplattform während der Übertragung beispielsweise die durch den ausgewählten Übertragungsweg zur Verfügung gestellte Bandbreite und optimiert dabei die Kosten der Übertragung, so kann ein Wechsel des Übertragungsprotokolls und/oder -weges initiiert werden, wenn diese Bandbreite unter einen bestimmten Grenzwert fällt. Dies ist sinnvoll, wenn zum Beispiel die Art der Übertragung eine Mindestbandbreite erfordert, etwa eine Videoübertragung.

Die intelligente Entscheidungsplattform kann zur automatischen Entscheidung über einen optimalen Übertragungsweg Informationen verwenden, welche sie bereits zuvor gespeichert hat. Diese können in Form eines Diensteprofils oder einer Diensteanforderung zuvor von einem Teilnehmer eingegeben werden oder anhand bereits früher angeforderter Übertragungen in einem Teilnehmerprofil gespeichert worden sein.
Die Identität des Teilnehmers kann bei Übertragungsbeginn ermittelt werden. Im Telefonnetz geschieht dies in Form der 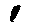 Calling Party Address' (CgPA). Im Internet geschieht dies durch die Internet Adresse und zum Beispiel dem 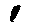 login' Namen des Teilnehmers.

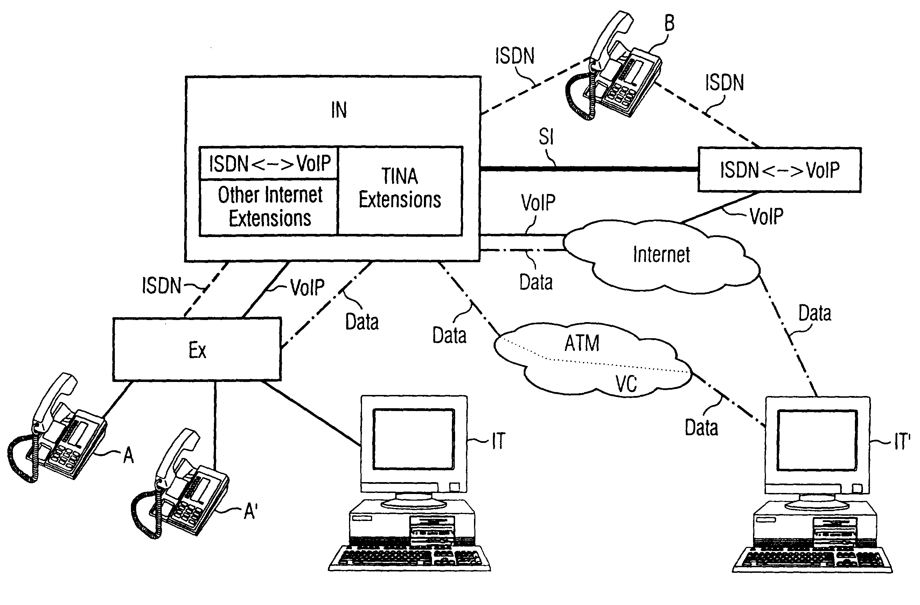

Im folgenden wird die Erfindung anhand von Ausführungsbeispielen erläutert. Dabei zeigt Figur 1 einen beispielhaften Aufbau eines Kommunikationsnetzes, welches unterschiedliche Übertragungswege und Übertragungsprotokolle zur Verfügung stellt.

Die Teilnehmer benutzen in diesem beispielhaften Netz verschiedene Endgeräte, so zum Beispiel herkömmliche Telefone A, A', ISDN Telefone B oder andere Endgeräte IT, IT' zur Datenübertragung.
Die intelligente Entscheidungsplattform IN ist zum einen mit den Kommunikationsnetzen verbunden, z. B. über Vermittlungsstellen Ex und verschiedene Verbindungen ISDN, VoIP, Data zu verschiedenen Netzen ATM, Internet. Die unterschiedlich gearteten Verbindungen sind in der Figur mit verschiedenartigen Linien gekennzeichnet.
Die intelligente Entscheidungsplattform IN enthält dabei Funktionen, welche zur Bearbeitung der unterschiedlichen Anfragen benötigt werden, zum Beispiel die Umwandlung von ISDN Rufe in Sprachvermittlung über Internet (Voice over IP) und umgekehrt.

Im folgenden werden mehrere Ausführungsbeispiele anhand der Figur beschrieben.

### Beispiel 1: Telefonverbindung

Ein Telefonteilnehmer A möchte eine Telefonverbindung zu einem zweiten Teilnehmer B herstellen. Um die Vorteile eines adaptiven Wechsels des Übertragungsprotokolls in Abhängigkeit von Anforderungen an die Dienstqualität und Kosten zu nutzen, baut A den Anruf über die intelligente Entscheidungsplattform IN auf.
Aufgrund der bereits gespeicherten Dienstanforderungen des Teilnehmers A bestimmt IN, wie die Verbindung zu B aufgebaut werden soll. Die Entscheidungsplattform erkennt dabei die Identität von A durch die Calling Party Address, die bei dem Verbindungsaufbau übermittelt wird.
Handelt es sich nicht um ein herkömmliches (ISDN) Telefon, sondern über ein spezielles Telefon für einen Internet Dienst für Sprachübertragung (Voice over IP), so IP Adresse des Endgerätes sowie Login oder ähnliche eindeutige Kennungen verwendet.

### a) Entscheidungskriterium Kosten.

Angenommen, der Teilnehmer ist hauptsächlich an sehr günstigen Übertragung interessiert, die Übertragungsgeschwindigkeit oder -sicherheit ist dafür zweitrangig. Dann wird sich die intelligente Entscheidungsplattform für eine Übertragung der Sprachdaten in Paketform über das Internet entscheiden, das sogenannte 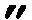 Voice over II". Die bei der Übertragung mindestens benötigte Bandbreite wird dann als Grenzwert festgelegt, und nur solange dieser Grenzwert nicht unterschritten wird, läuft die Übertragung über das Internet.

Stellt die intelligente Entscheidungsplattform durch Messungen jedoch fest, daß der zuvor festgelegte Grenzwert unterschritten wurde, die Übertragung auf einen anderen Übertragungsweg / -protokoll umgestellt. Dies kann durch einen erneuten Entscheidungsprozeß (wie beim ersten Mal) geschehen, oder auch durch eine 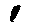 Standard-Umleitung', einen sogenannten Default Weg. Dabei soll die Übertragung nicht unterbrochen werden.

### b) Entscheidungskriterium Abhörsicherheit.

Die intelligente Entscheidungsplattform kann in dem Teilnehmerprofil auch weitergehende Informationen verwenden. So kann die gewünschte Abhörsicherheit zum Beispiel in Form eines 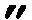 Sicherheitswertes" gespeichert sein. Dieser kann sich zum Beispiel ergeben aus der Stellung des Teilnehmers in einem Betrieb.
So können Gespräche von Firmenvorständen beispielsweise eine sehr hohe Sicherheitsstufe aufweisen; ebenso diejenigen von Mitarbeitern bestimmter Firmenbereiche, wie Finanzen, Personal etc.

Die Erhöhung der Sicherheitsstufe ist in diesem Fall durch einen Wechsel des Übertragungsweges möglich. Ein Datenstrom in einem paketvermittelten Netz kann theoretisch abgehört werden.
Um dies zu verhindern, kann bei einer gewünschten Übertragung mit höherer Abhörsicherheit bestimmte Übertragungswege ausgeschlossen werden. Diese Übertragungen werden dann zum Beispiel maximale Wege über firmeneigene Standleitungen geführt. Es können auch Verschlüsselungsmechanismen angewendet werden, die die Abhörsicherheit erhöhen.
So ist eine vorteilhafte Weiterbildung der Erfindung die Möglichkeit, daß der Teilnehmer während der Verbindung durch eine Eingabe (beispielsweise den Druck auf eine Taste oder bestimmte Tastenkombination) signalisiert, daß er eine geänderte Sicherheitsstufe wünscht. Dieser Wunsch kann via DTMF übertragen werden oder auch z. B. in SS7 Kodierung.
Nach dem Empfang dieser Signalisierung entscheidet dann die intelligente Entscheidungsplattform, ob der Wechsel des Übertragungsweges notwendig ist, oder der Wechsel des Übertragungsprotokolles. Dann führt sie die gewünschten Änderungen durch, also die zusätzliche Verwendung eines Verschlüsselungsalgorithmus oder der Wechsel auf einen anderen Übertragungsweg. Die Übertragung läuft weiter, der Wechsel wird für den Teilnehmer unbemerkt durchgeführt.
Eine kurze Bestätigung (zum Beispiel akustisch) kann dem Teilnehmer jedoch auch anzeigen, daß er nun eine Übertragung mit einer höheren Sicherheitsstufe zur Verfügung hat.

Möchte ein Teilnehmer A eine Verbindung zu einem Teilnehmer B, welcher über einen ISDN Anschluß verfügt, aufnehmen, so gibt es bei der in der Figur beispielhaft dargestellten Konfiguration verschiedene Möglichkeiten.
- A verfügt selber über einen ISDN Anschluß:
   Die Übertragung kann wahlweise von der intelligenten Entscheidungsplattform komplett über die ISDN Leitung geleitet werden, oder
   zumindest ein Teil der Übertragung geschieht über eine andere Verbindung, zum Beispiel Voice over IP, zur Kostenersparnis.
   Dafür sind dann jedoch zusätzliche Funktionen ISDN<->VoIP notwendig, die etwa für eine Umsetzung der Daten sorgen, damit die Übertragung über mehrere unterschiedlich geartete Protokolle übertragen werden kann. Da diese Umwandlung auch auf der Seite des Teilnehmers B durchgeführt werden muß, ist dort eine ebensolche Funktion vorhanden. Sie kann über Steuerinformationen SI von der intelligenten Entscheidungsplattform IN aus gesteuert werden.
- A verwendet keinen ISDN Anschluß (sondern zum Beispiel Voice over IP):
   hier gilt ähnliches wie oben.
   Die Übertragung via Voice over IP gelangt entweder bis zur Entscheidungsplattform und wird dort in ISDN Signale umgesetzt, oder weiter über die entsprechenden IP-Übertragungswege um dann erst kurz bei dem Teilnehmer B umgesetzt zu werden.

### Beispiel 2: Datenverbindung

Ähnlich wie bei einer Telefonverbindung gibt es auch bei Datenverbindungen verschiedenste Anforderungen an die Dienstqualität und die Kosten.
Dies können zum einen Anforderungen an die Dienstgüte (Quality of Service) sein: für bestimmte Daten wie zum Beispiel Video ist eine bestimmte Mindest-Übertragungsbandbreite notwendig, um eine vernünftige Übertragungsqualität zu erreichen. Weiterhin darf die Anzahl der Fehler (z. B. verlorene oder während der Übertragung aus bestimmten Gründen weggeworfene Datenpakete) einen bestimmten Grenzwert nicht übersteigen. Auch abhängig von dem Teilnehmer (welcher über IP-Adresse und Kennung identifizierbar ist) kann ein Rückschluß auf die gewünschte (oder zugestandene) Übertragungsqualität und -sicherheit zugelassen sein.

Angenommen, die Teilnehmer IT und IT' gehören zu einem virtuellen Firmennetz, welches über Fremdnetze miteinander verbunden ist. So kann eine herkömmliche Verbindung über Ex, und die Datenverbindung Data über Internet von IN aufgebaut werden. Um eine erhöhte Übertragungssicherheit für firmeninterne Daten zu erreichen, kann ein zusätzliches Sicherheitsprotokoll verwendet werden.
Wird die Übertragungsrate gegenüber den Anforderungen des Teilnehmers IT oder IT' zu niedrig, leitet die intelligente Entscheidungsplattform IN die Verbindung zum Beispiel über eine dedizierte ATM Verbindung, in der Figur durch eine zweite Verbindung Data und ATM (VC) zu IT' dargestellt.

Erhöht sich die Anforderung an die Übertragungssicherheit, kann die intelligente Entscheidungsplattform ebenso einen anderen Übertragungsweg und/oder ein anderes Übertragungsprotokoll wählen.

### Abkürzungsverzeichnis

- A: Teilnehmer A
- ATM: Asyncronous Transfer Mode
- B: Teilnehmer B
- Ex: Exchange, Vermittlungsstelle
- IP: Internet Protocol
- ISDN: Integrated Services Digital Network
- IT: Information Terminal
- SS7: Zentralkanalsignalisierungssystem Nr. 7
- TINA: Telecommunication Information Networking Architecture
- VC: Virtual Circuit
- VoIP: Voice over IP

## Patentansprüche

1. Verfahren zum Wechsel von einem ersten Übertragungsweg und/oder Übertragungsmodus in einen zweiten Übertragungsweg und/oder Übertragungsmodus während einer Übertragung, wobei
a) ein erster Übertragungsweg und/oder Übertragungsmodus von einem Entscheidungssystem abhängig von mindestens einem Grenzwert ausgewählt wird, und
b) während der Übertragung durch das Entscheidungssystem die Auswahl des Übertragungsweges und/oder Übertragungsmodus mindestens einmal überprüft wird, und
c) wenn diese Überprüfung eine Unterschreitung oder Überschreitung mindestens eines Grenzwertes während der Übertragung ergibt, von dem Entscheidungssystem ein zweiter Übertragungsweg und/oder Übertragungsmodus ausgewählt wird, und
d) auf diesen zweiten Übertragungsweg und/oder Übertragungsmodus gewechselt wird, ohne die Übertragung zu unterbrechen.

2. Verfahren zum Wechsel von einem ersten Übertragungsweg und/oder Übertragungsmodus in einen zweiten Übertragungsweg und/oder Übertragungsmodus während einer Übertragung, wobei
a) ein erster Übertragungsweg und/oder Übertragungsmodus von einem Entscheidungssystem abhängig von mindestens einem ersten Grenzwert ausgewählt wird, und
b) während der Übertragung durch spezielle Signalisierung eine Veränderung des ersten oder eines zweiten Grenzwertes angezeigt wird, und
c) wenn eine Überprüfung des ersten Übertragungsweges und/oder Übertragungsmodus eine Unterschreitung dieses veränderten Grenzwertes ergibt,
d) von dem Entscheidungssystem ein zweiter Übertragungsweg und/oder Übertragungsmodus ausgewählt wird, und
e) auf diesen zweiten Übertragungsweg und/oder Übertragungsmodus gewechselt wird, ohne die Übertragung zu unterbrechen.

3. Verfahren nach einem der vorigen Patentansprüche,
dadurch gekennzeichnet, daß
die Übertragungsqualität während der Übertragung mit einem Grenzwert verglichen wird.

4. Verfahren nach einem der vorigen Patentansprüche,
dadurch gekennzeichnet, daß
die zur Verfügung stehende Bandbreite während der Übertragung mit einem Grenzwert verglichen wird.

5. Verfahren nach einem der vorigen Patentansprüche,
dadurch gekennzeichnet, daß
die zur Verfügung stehende Abhörsicherheit während der Übertragung mit einem Grenzwert verglichen wird.

6. Verfahren nach einem der vorigen Patentansprüche,
dadurch gekennzeichnet, daß
das intelligente Entscheidungssystem Informationen gespeichert hat, welche zur Erstellung eines Grenzwertes für die Übertragung geeignet sind.

7. Verfahren nach Patentanspruch 6,
dadurch gekennzeichnet, daß
die Informationen kommunikationsteilnehmerspezifisch sind.

8. Verfahren nach einem der vorigen Patentansprüche,
dadurch gekennzeichnet, daß
die Erkennung des Kommunikationsteilnehmers automatisch geschieht, anhand von vor der Übertragung gelieferten Identifikationskennzeichen.
